# EUROPEAN PATENT SPECIFICATION

(11) **EP 1 385 271 B1**
(45) Date of publication and mention of the grant of the patent: **22.04.2009**
(21) Application number: 03012733.6
(22) Date of filing: 04.06.2003
(51) Int. Cl.: H04B 1/08, B60R 11/02

(54) **Car radio with removable front**
Autoradio mit abnehmbarem Bedienteil
Récepteur radio d'un véhicule avec un panneau frontal amovible

(30) Priority: 28.06.2002 US 392466 P
(43) Date of publication of application: 28.01.2004
(73) Proprietor: Continental Automotive GmbH, 30165 Hannover (DE)
(72) Inventor: Yeo Wee Kiang, David, Singapore 570191 (SG)

(56) References cited:
- US-A- 5 510 957
- US-A- 5 953 302

## Description

The invention relates to a mechanism for reversibly storing a display device pertaining to a car information output apparatus, said mechanism comprising a guidance facility for providing two-way guidance for said display device along a substantially linear path, spring means for exerting an ejecting force on said display device, insert means for under control of an external force allowing insertion of said display device into said mechanism, and lock means for locking said display device after said insertion in a stored position, as has been recited in the preamble of Claim 1.
Nowadays, many car information output apparatuses come with a display device, such as car radios, route planning systems, systems providing information such as pertaining to the car proper or to other circumstances, and other.
It has been found necessary to allow reversibly storing of such a display device in the form of an LCD, TFT, Touch-screen or OLED, within the space of the car radio enclosure and to subsequently allow ejecting the display device out from the enclosure. This ejecting may be used for repair, maintenance, and other purposes. Such storing mechanism has been configured with an electromechanical system comprising of batteries, motors, gears, printed circuit board, wires, a mechanical frame, and other parts. This great complexity is brought about, because an electromechanical system can have various different constructions, and can in particular, store and subsequently discharge a substantial amount of energy to the system to displace the display device during insertion and during ejection, respectively. Such complexity is a marked disadvantage.

It is in principle possible to apply a single long compression spring to store and subsequently relieve compression energy. The inventor has recognized that such long spring will easily buckle and fail to be compressed according to its original intent. The inventor has furthermore recognized the possibility to use two compression strings, mounted as it were, in series. With two separate compression springs, their separate lengths can be made shorter to appreciably reduce the buckling effect.
In consequence, amongst other things, it is an object of the present invention to provide a configuration with two compression springs. Now therefore, according to one of its aspects, the invention is characterized in that said spring means comprise a first compression spring facility having a first end and a second end, and a second compression spring facility having a third end and a fourth end, and in that said mechanism comprises an intermediate member that joins said second end and said third end, so that relative travel between said first end and said fourth end determines an overall movement of said display device.
An embodiment of the invention is characterized in that said first compression spring facility has a first guide facility that is incorporated in both bracket frame and bracket sleeve therefor.
Another embodiment of the invention is characterized in that said second compression spring facility has a second guide that rests on the bracket's base at a first end of the second compression spring facility, and the other end thereof being guided by a tubular construction built from the bracket sleeve.
Yet another embodiment of the invention is characterized in that all three components bracket base, spindle guide G1 and bracket sleeve allow slotting into each other for compactness.
Preferably, said first and second compression spring facilities are screw springs.
An alternative embodiment of the invention is characterized in that
said first and second compression spring facilities are laterally disposed with respect to each other.

The invention also relates to a car radio provided with a mechanism for therein storing a display device as claimed in Claim 1. Further advantageous aspects of the invention are recited in dependent Claims.

These and further features, aspects and advantages of the invention will be discussed more in detail hereinafter with reference to the disclosure of preferred embodiments of the invention, and in particular with reference to the appended Figures that illustrate:
Figures 1a-1d, an example of a display device;
Figures 2a-2d, a typical car radio enclosure;
Figure 3, a two-level ejection system embodiment according to the invention;
Figures 4a, 4b, the first mechanism in eject mode and in store mode, respectively;
Figures 5a, 5b, the second mechanism in eject mode and in store mode, respectively;
Figure 6, a further view of the embodiment; Figure 7, a still further view of the embodiment.

Reference will now be made to the drawings, wherein depicted elements are not necessarily shown to scale and wherein like or similar elements are designated by the same reference numeral through the several views.

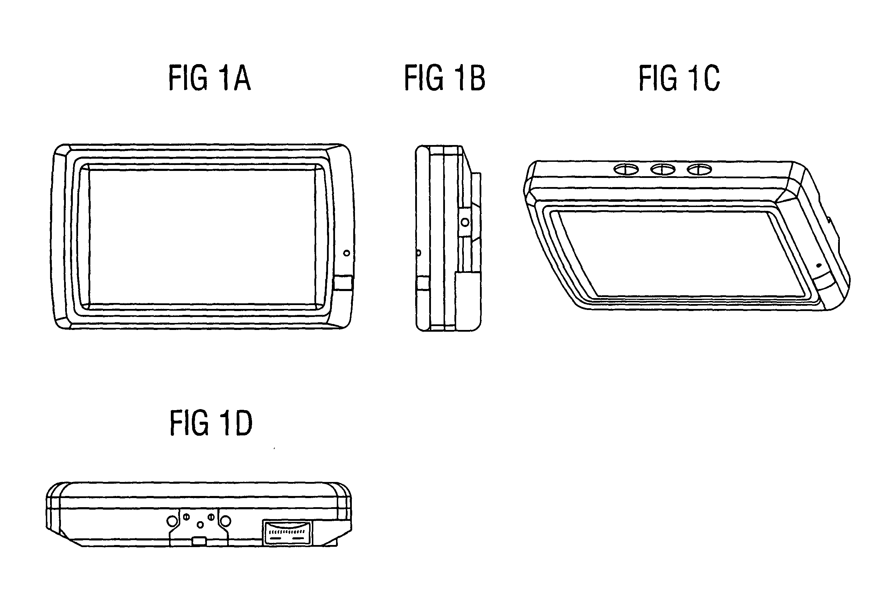

Figures 1a-1d illustrate an example of a display device for use in a car radio or similar car-based information output apparatus. Herein, Figure 1a illustrates a front view of the display. Such display may accommodate a few lines of characters, radio station information, a road map, iconized representations of car-internal or car-external situations, or other. The size may be various, such as without restrictions 3 x 5 centimeters in a relatively small display, or 12 x 15 centimeters in a larger one. Figure 1b shows a plan view from the shorter side, and Figure 1d from the longer side. Finally, Figure 1c is a perspective view. As marketed, such displays may come with drivers, decoders, power supply, data storage, and various other subsystems and peripherals that will not be further herein considered for brevity.

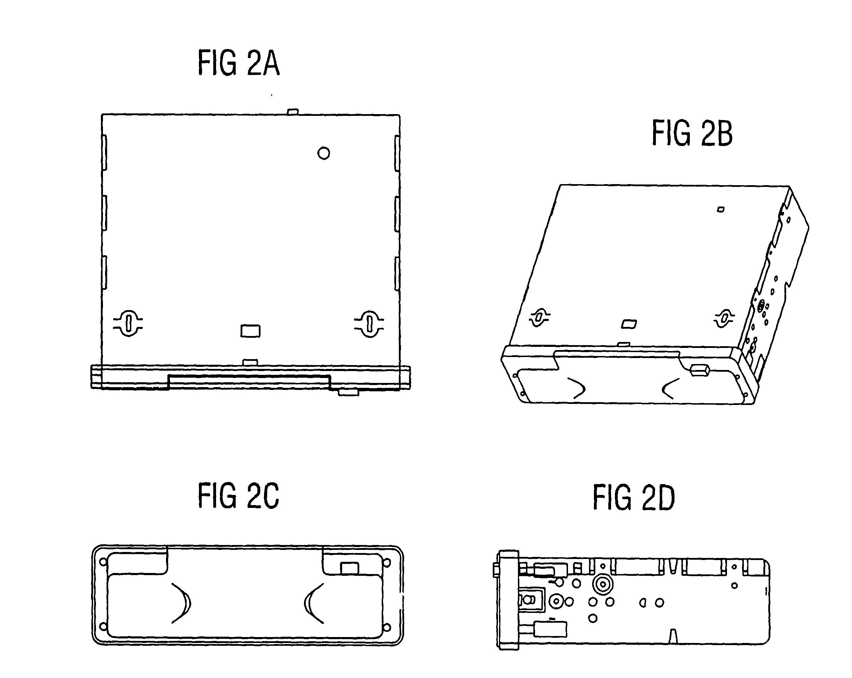

Figures 2a-2d illustrate a typical car radio enclosure. Figure 2a shows a top plan view of the enclosure, together with indications of the size thereof: 178.6 times 150.6 millimeters. Figure 2c shows a front view of the device, with the display device in place. Figure 2d shows a side view of the car radio enclosure, and Figure 2b a perspective view of the car radio enclosure. For brevity, no further details on either the enclosure proper, or on the car radio functionality, are given here, apart from such internal constructive details as presented hereinafter.
Now, along with providing the functions of storing and ejecting the display device via a standalone mechanical system, the following two main problems will arise:
1. Buckling of the compression spring. In particular, in order to displace the display device by more than half its length outside the car radio enclosure, a long compression spring will be needed. Such long compression spring will increase the tendency of the spring to buckle. This buckling effect will hinder both the natural operation of the spring and will reduce its reliability, and therefor, of the overall system as well.
2. Over-pitched compression spring. In particular, the display device, whether it is based on LCD, TFT, Touch- screen, or OLED technology, is a relatively heavy component. To then effectively move the display device, a high spring force is needed. This high force can be realized by a spring with greater pitch. However, the over-pitching of such a spring will subject the spring to excessive stress which can reduce fatigue resistance.

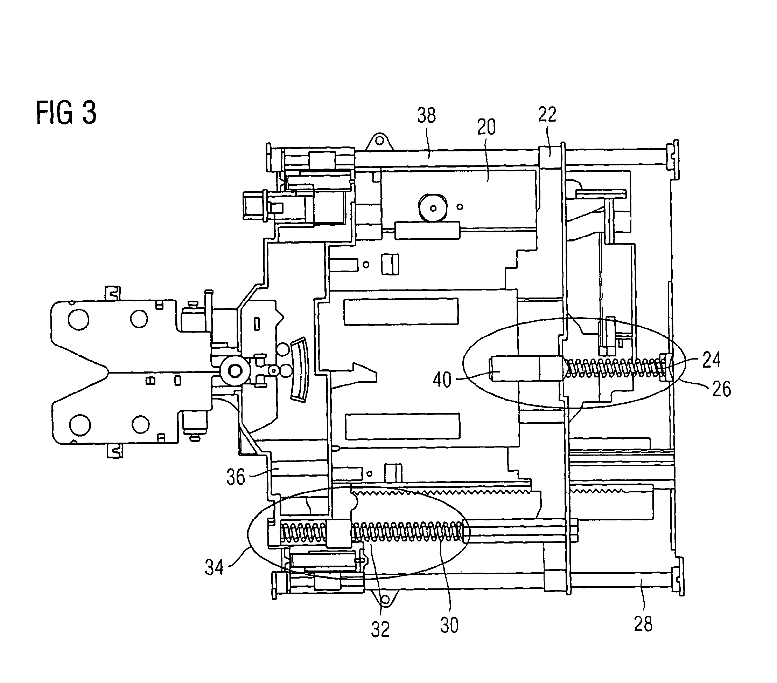

Figure 3 shows a two-level ejection system embodiment according to the invention. For brevity, the display device itself has not been shown. The inserting force is applied from the left hand side. The mechanism is built within a bracket frame 20, that houses the various other moving parts. For the greater part, other parts shown but not related to the invention proper, have not been discussed for reasons of brevity and clearness. Now in particular, the moving parts have been configured into a two-level ejection sub-system. These moving parts comprise:
a) Sub-system A (26), in particular made up from bracket frame (20), bracket sleeve (22), and compression spring C1 (24).
b) Sub-system B (34): in particular made up from bracket base (36), spindle guide G1 (32), compression spring C2 (30) and bracket sleeve (22).
The desired ejection distance of the display device is comprised of the combined length of two compression springs C1 (24) and C2 (30). This approach eliminates the need for a single long spring to achieve the desired ejection length. In sub-system A, additional guides such as 40, for compression spring C1, are incorporated into both bracket frame 20 and into bracket sleeve 22 to further reduce the tendency of the compression spring to buckle. For brevity, a locking mechanism for keeping the display in its inserted position has not been shown; neither the relieving mechanism for the locking mechanism has been considered further.

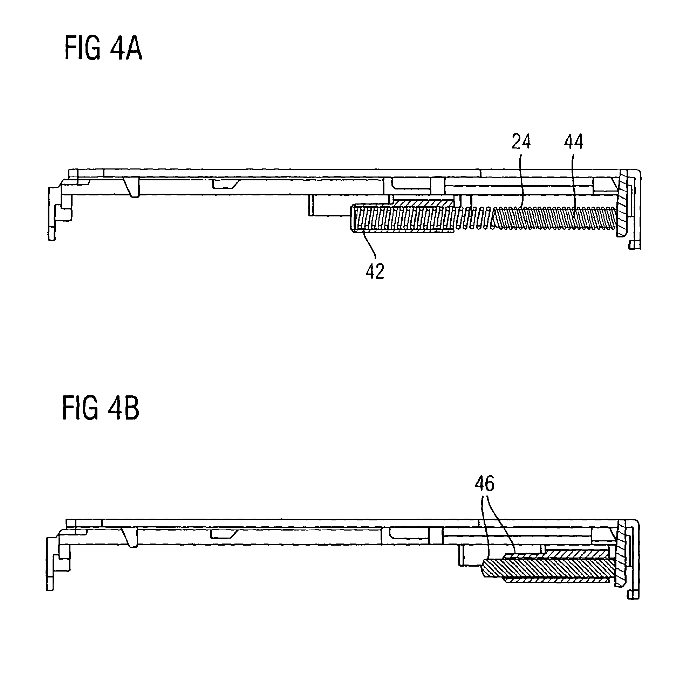

Figures 4a, 4b show a side view of the first mechanism 26 in eject mode and in store mode, respectively. In this sub-system A, in the eject mode of Figure 4a, internal guide 44 and external guide 42 both contain part of the compression spring. In the store mode of Figure 4b, these two guides are designed to slot into each other (46), to thereby minimize the space taken up when the display device is stored within the car radio enclosure.

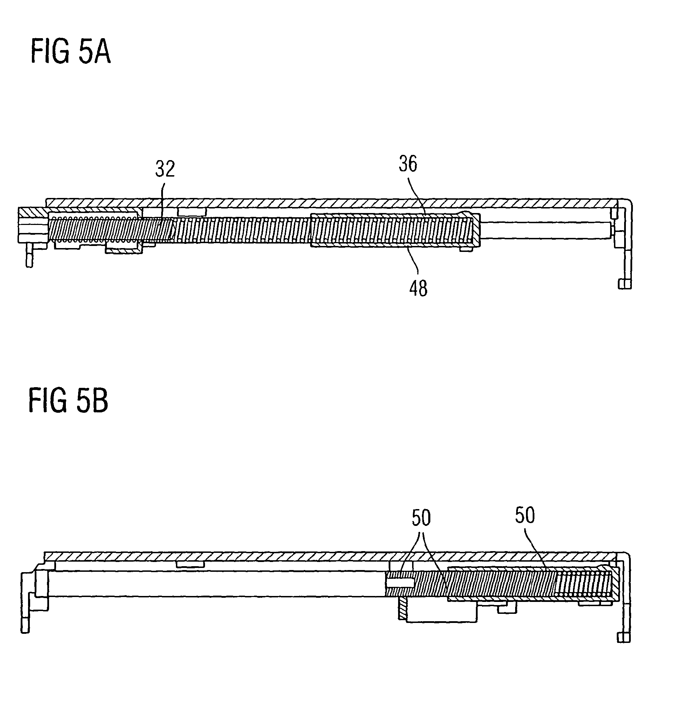

Figures 5a, 5b show the second mechanism (34) in eject mode and in store mode, respectively. In this sub-system B, an additional spindle guide G1 (32) has the function to guide the end of the compression spring (30) resting on the bracket base (36), while the other end of the compression spring (30) is guided by the tubular construction (48) built from the bracket sleeve (22). To achieve maximum compactness, all three components, bracket base, spindle guide G1 and bracket sleeve, have been shaped so as to slot into each other (50).
The high energy needed to eject the display device can now be distributed among the two springs. Because the two compression springs are relatively short, this feature will permit the use of greater-diameter spring wire for attaining higher stiffness whilst minimizing the probability and effect of buckling.
The effect of the invention on the spring force is to allow it to be much more adjustable along with a variation in the spring wire diameter as compared to varying the compression spring pitch. As such, the pitch can be designed to the minimum value for achieving a more reliable spring life.
The bracket base runs on a first and a second hard-chrome plated spindle S1 28 and spindle S2 38 mounted on the bracket frame 20, cf. Figures 4a, 5a, that show the mechanism in EJECT position. The bracket base 36 houses the attachment to secure the display device (LCD, TFT, Touch-screen).
The bracket base slides with close fit along spindle S1 while a larger clearance is specified between spindle S2 and the bracket base. This close fit between spindle S1 and bracket base 36 serves to provide a good reference during the ejection of the display device mounted on the 2-level ejection mechanism.

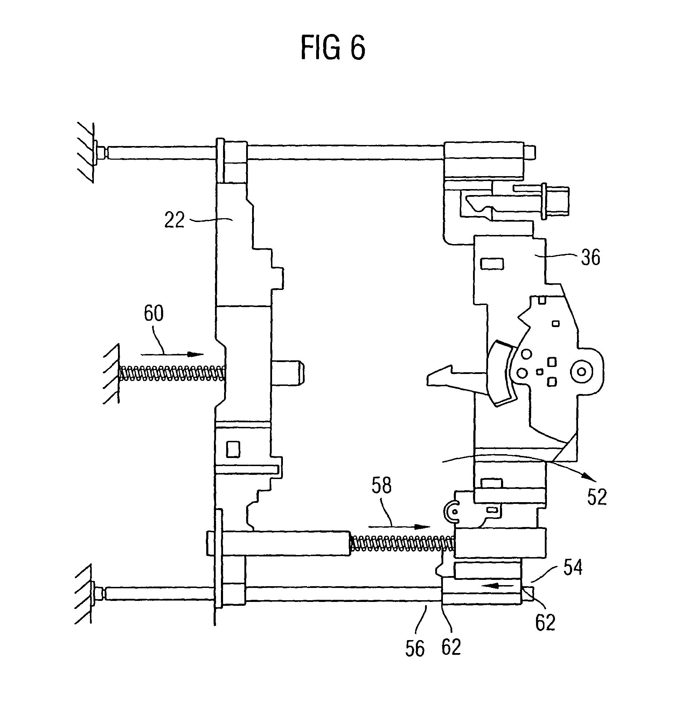

Figure 6 shows a further view of the embodiment. Note that with respect to Figure 3, the Figure has been reversed in that the inserting force is applied from the right. Various forces 58 from compression spring C2, 60 from compression spring C1, and opposing frictional forces 54, 56 on the contact points 62 between spindle S1 and bracket base 36 have been indicated. Now in particular, compression spring C2 has been located as close as possible to spindle S1, in order to minimize the resultant torque on spindle S1, indicated by arrow 52, and consequently to minimize the reaction or friction force between spindle S1 and the sliding surface of the bracket base 36. The effect is to minimize both static and dynamic friction at the point of contact between spindle S1 and bracket base. This minimization of friction contributes to the best sliding condition for the bracket base.

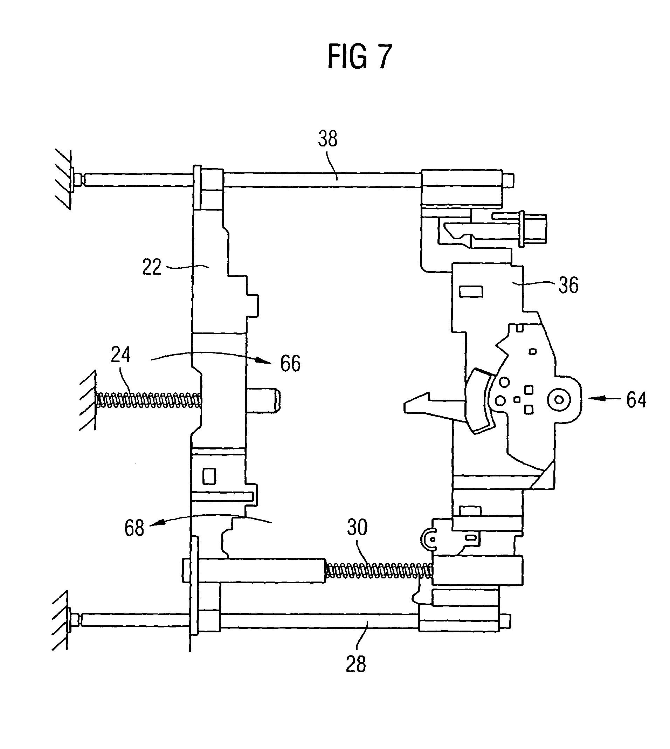

Figure 7 shows a still further view of the embodiment in the same orientation as Figure 6, together with an arrow indicating the inserting force 64. In particular, when the mechanism is operated by pushing the bracket (36) base toward a 'Lock' position of Figures 4b, 5b, the longer compression spring C2 (30) creates a torque indicated by arrow 68 on the bracket sleeve on the side close to spindle S1 (28). The shorter compression spring C1 has been located at the center of the bracket sleeve (22) to counter balance the torque indicated by arrow 66, that is created by compression spring C1.
The two systems have been fine-tuned, in terms of force, to provide an optimized friction condition for all sliding components mounted on the mechanism. The locations of both sub-systems have been designed to minimize the loss of force needed to eject the display device. This further lowers the requirements on the ejection spring system.
Now, the present invention has hereabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in the Claims.

## Claims

1. A mechanism for reversibly storing a display device pertaining to a car information output apparatus, said mechanism comprising a guidance facility for providing two-way guidance for said display device along a substantially linear path, spring means for exerting an ejecting force on said display device, insert means for under control of an external force allowing insertion of said display device into said mechanism, and lock means for locking said display device after said insertion in a stored position, said mechanism being **characterized in that** said spring means comprise a first compression spring facility (24) having a first end and a second end, and a second compression spring facility (30) having a third end and a fourth end, and **in that** said mechanism comprises an intermediate member (22) that joins said second end and said third end, so that relative travel between said first end and said fourth end determines an overall movement of said display device.

2. A mechanism as claimed in Claim 1, being **characterized in that** said first compression spring facility (24) has a first guide facility that is incorporated in both bracket frame (40) and bracket sleeve (42) therefor.

3. A mechanism as claimed in Claim 1, being **characterized in that** said second compression spring facility has a second guide that rests on the bracket's (36) base at a first end of the second compression spring facility, and the other end thereof being guided by a tubular construction built from the bracket sleeve (22).

4. A mechanism as claimed in claim 3, being **characterized in that** all three components bracket base (36), spindle guide G1 (32) and bracket sleeve (22) allow slotting into each other for compactness.

5. A mechanism as claimed in Claim 1, for application to a car radio.

6. A mechanism as claimed in Claim 1, being **characterized in that** said first and second compression spring facilities are screw springs.

7. A mechanism as claimed in Claim 1, being **characterized in that** said first and second compression spring facilities are laterally disposed with respect to each other.

8. A car radio provided with a mechanism for therein storing a display device as claimed in Claim 1.

## Patentansprüche

1. Mechanismus zum umkehrbaren Lagern einer Displayeinrichtung hinsichtlich einer Autoinformationsausgabevorrichtung, wobei der Mechanismus eine Führungsanlage umfaßt zum Bereitstellen einer Zweiwegeführung für die Displayeinrichtung entlang eines im Wesentlichen linearen Weges, Federmittel zum Ausüben einer Auswurfkraft auf die Displayeinrichtung, Einführmittel, um unter der Steuerung einer externen Kraft das Einführen der Displayeinrichtung in den Mechanismus zu gestatten, und Verriegelungsmittel zum Verriegeln der Displayeinrichtung nach dem Einführen in eine gelagerte Position, wobei der Mechanismus **dadurch gekennzeichnet ist, daß** die Federmittel eine erste Druckfederanlage (24) mit einem ersten Ende und einem zweiten Ende und eine zweite Druckfederanlage (30) mit einem dritten Ende und einem vierten Ende umfaßt und daß der Mechanismus ein Zwischenglied (22) umfaßt, das das zweite und das dritte Ende verbindet, so daß eine Relativbewegung zwischen dem ersten Ende und dem vierten Ende eine Gesamtbewegung der Displayeinrichtung bestimmt.

2. Mechanismus nach Anspruch 1, der **dadurch gekennzeichnet ist, daß** die erste Druckfederanlage (24) eine erste Führungsanlage aufweist, die sowohl in einen Halterungsrahmen (40) als auch eine Halterungshülse (42) dafür integriert ist.

3. Mechanismus nach Anspruch 1, der **dadurch gekennzeichnet ist, daß** die zweite Druckfederanlage eine zweite Führung aufweist, die auf der Basis der Halterung (36) an einem ersten Ende der zweiten Druckfederanlage ruht und das andere Ende davon durch eine von der Halterungshülse (22) aufgebaute Röhrenkonstruktion geführt wird.

4. Mechanismus nach Anspruch 3, der **dadurch gekennzeichnet ist, daß** alle drei Komponenten Halterungsbasis (36), Spindelführung G1 (32) und Halterungshülse (22) das Einschieben ineinander für Kompaktheit gestatten.

5. Mechanismus nach Anspruch 1 zur Anwendung auf ein Autoradio.

6. Mechanismus nach Anspruch 1, der **dadurch gekennzeichnet ist, daß** die erste und zweite Druckfederanlage Schraubenfedern sind.

7. Mechanismus nach Anspruch 1, der **dadurch gekennzeichnet ist, daß** die erste und zweite Druckfederanlage zueinander seitlich angeordnet sind.

8. Autoradio, mit einem Mechanismus zum darin Lagern einer Displayeinrichtung wie in Anspruch 1 beschrieben.

## Revendications

1. Mécanisme pour stocker de façon réversible un dispositif d'affichage appartenant à un appareil de sortie d'informations pour automobile, ledit mécanisme comprenant un moyen de guidage pour fournir un guidage bidirectionnel pour ledit dispositif d'affichage le long d'un chemin substantiellement linéaire, un moyen de ressort pour exercer une force d'éjection sur ledit dispositif d'affichage, un moyen d'insertion pour, sous le contrôle d'une force externe, permettre l'insertion dudit dispositif d'affichage à l'intérieur dudit mécanisme, et un moyen de verrouillage pour verrouiller ledit dispositif d'affichage après ladite insertion dans une position stockée, ledit mécanisme étant **caractérisé en ce que** ledit moyen de ressort comprend un premier moyen de ressort de compression (24) ayant une première extrémité et une deuxième extrémité, et un deuxième moyen de ressort de compression (30) ayant une troisième extrémité et une quatrième extrémité, et **en ce que** ledit mécanisme comprend un élément intermédiaire (22) qui joint ladite deuxième extrémité et ladite troisième extrémité, de sorte que le déplacement relatif entre ladite première extrémité et ladite quatrième extrémité détermine un mouvement général dudit dispositif d'affichage.

2. Mécanisme selon la revendication 1, étant **caractérisé en ce que** ledit premier moyen de ressort de compression (24) a un premier moyen de guide qui est incorporé à la fois dans le cadre support (40) et dans l'enveloppe de support (42) pour celui-ci.

3. Mécanisme selon la revendication 1, étant **caractérisé en ce que** ledit deuxième moyen de ressort de compression a un deuxième guide qui repose sur la base de support (36) au niveau d'une première extrémité du deuxième moyen de ressort de compression, et l'autre extrémité de celui-ci étant guidée par une construction tubulaire construite à partir de l'enveloppe de support (22).

4. Mécanisme selon la revendication 3, étant **caractérisé en ce que** les trois composants base de support (36), guide d'axe G1 (32) et enveloppe de support (22) permettent de s'encastrer les uns dans les autres aux fins de compacité.

5. Mécanisme selon la revendication 1, destiné à une application à une radio d'automobile.

6. Mécanisme selon la revendication 1, étant **caractérisé en ce que** lesdits premier et deuxième moyens de ressort de compression sont des ressorts à vis.

7. Mécanisme selon la revendication 1, étant **caractérisé en ce que** lesdits premier et deuxième moyens de ressort de compression sont disposés latéralement l'un par rapport à l'autre.

8. Radio pour automobile prévue avec un mécanisme pour stocker dans celui-ci un dispositif d'affichage selon la revendication 1.
